Europäisches Patentamt

European Patent Office

Office européen des brevets

(11) Numéro de publication : **0 515 493 B1**

(19)

# FASCICULE DE BREVET EUROPEEN

(12)

(45) Date de publication du fascicule du brevet :
09.11.94 Bulletin 94/45

(51) Int. Cl.⁵ : **G01N 27/333**

(21) Numéro de dépôt : **91904477.6**

(22) Date de dépôt : **04.02.91**

(86) Numéro de dépôt international :
**PCT/FR91/00072**

(87) Numéro de publication internationale :
**WO 91/12522 22.08.91 Gazette 91/19**

(54) **MEMBRANE DE SULFURE D'ARGENT POUR LE DOSAGE DES IONS HALOGENURES PENDANT LA PREPARATION DES EMULSIONS PHOTOGRAPHIQUES.**

(30) Priorité : **12.02.90 FR 9001857**

(43) Date de publication de la demande :
**02.12.92 Bulletin 92/49**

(45) Mention de la délivrance du brevet :
**09.11.94 Bulletin 94/45**

(84) Etats contractants désignés :
**DE FR GB NL**

(56) Documents cités :
**EP-A- 0 126 452**
**DE-A- 1 902 719**
**FR-A- 2 203 518**
**GB-A- 2 061 525**
**US-A- 3 591 464**
**US-A- 3 787 309**
**US-A- 3 824 169**

(73) Titulaire : **KODAK-PATHE**
**26, rue Villiot**
**F-75594 Paris Cedex 12 (FR)**
Titulaire : **EASTMAN KODAK COMPANY**
**343 State Street**
**Rochester New York 14650-2201 (US)**

(72) Inventeur : **ROBERT, Philippe Gérald**
**Kodak-Pathé,**
**Zone Industrielle**
**F-71102 Chalon-sur-Saône Cédex (FR)**

(74) Mandataire : **Parent, Yves et al**
**Kodak-Pathé**
**Département Brevets et Licences**
**CRT 60/1 -Zone Industrielle**
**F-71102 Chalon-sur-Saône Cédex (FR)**

EP 0 515 493 B1

# Description

L'invention concerne une membrane sensible aux ions halogénures utilisable dans une électrode servant à mesurer l'activité d'ions en solution. En particulier, l'invention concerne une membrane à base de sulfure d'argent utilisable dans une électrode pour mesurer l'activité des ions halogénures lors de la préparation des émulsions photographiques.

Durant la précipitation des halogénures d'argent, il est utile de connaître l'excès de sel aans le réacteur de précipitation par une mesure de potentiel ($V_{Ag}$) qui est en relation avec l'activité des ions argent en solution, afin de contrôler cette précipitation, comme il est expliqué dans "The Theory of the Photographic Process", 4ème édition, édité par T.H. James, p. 5 Section F.

Les électrodes de la technique antérieure les plus couramment utilisées pour mesurer ce potentiel ($V_{Ag}$) sont des électrodes Ag/AgX comprenant un barreau d'argent recouvert d'halogénure d'argent. Ces électrodes présentent l'inconvénient de pouvoir être utilisées correctement uniquement dans des solutions pures d'halogénures. Leur réponse est erronnée en présence de faibles quantités d'un halogénure lourd dans une solution d'un halogénure plus léger (bromure ou iodure dans une solution de chlorure, iodure dans une solution de bromure). Ainsi, ce type d'électrodes ne donne pas de bons résultats dans les émulsions mixtes d'halogénures d'argent, sauf si la quantité des ions interférant est très faible. Par exemple, la réponse d'une électrode Ag/AgBr est faussée lors d'un apport d'iodure.

De plus, les électrodes Ag/AgX doivent être régulièrement nettoyées et réhalogénées, certains anions s'adsorbant fortement sur ces électrodes, ce qui conduit à des réponses erronées de façon irréversible.

On trouve dans le commerce des électrodes à membrane cristalline de sulfure d'argent qui permettent de doser l'activité ionique des ions argent en solution. Ces électrodes sont moins sensibles aux interférences d'autres anions, tels que les ions halogénures, ou bien aux interférences des oxydants ou des réducteurs présents dans l'émulsion, mais elles restent très coûteuses.

Le brevet français 2 203 518 décrit une électrode sensible aux ions chlorure obtenue en mélangeant du chlorure d'argent et du tellurure d'argent, une électrode sensible aux ions iodure obtenue en mélangeant de l'iodure d'argent et du séléniure d'argent, ou bien encore sensible aux ions chlorure obtenue en mélangeant $Ag_2S$, $Hg_2Cl_2$ et $Hg_2S$. Dans tous les cas, la sensibilité aux ions halogénures est apportée par la présence de l'halogénure correspondant dans la membane.

Le brevet des Etats-Unis d'Amérique 3 591 464 écrit une électrode à membrane cristalline, formée d'un mélange intime d'$Ag_2S$ et d'un autre composé choisi en fonction de la nature de l'ion dont on veut mesurer l'activité. Par exemple, pour détecter des ions $Cu^{2+}$, le pourcentage en moles de sulfure cuivrique par rapport au sulfure d'argent est compris entre 95 % CuS/5% $Ag_2S$ et 1 % CuS/99 % $Ag_2S$. Ainsi, à $Ag_2S$, on associe CuS, PbS, CdS et AgSCN pour doser respectivement $Cu^{++}$, $Pb^{++}$, $Cd^{++}$, et $SCN^-$.

Le brevet de Grande-Bretagne 2 061 525 décrit une membrane comprenant un mélange d'au moins quatre sulfures métalliques, chaque sulfure correspondant à un ion à doser. Par exemple, le mélange peut contenir 15 à 65% en poids de sulfure d'argent, 15 à 65% en poids de sulfure de cadmium, 30 à 65% en poids de sulfure de plomb, et 3 à 9% en poids de sulfure de cuivre. Ce mélange peut être obtenu par coprécipitation, par exemple, en ajoutant à une solution de sulfure de sodium une solution contenant un mélange de 0,3 mole de nitrate de cadmium, 0,3 mole de nitrate de plomb, 0,3 mole de nitrate d'argent et 0,1 mole de nitrate de cuivre. Cette membrane permet de doser les ions $Ag^+$, $Cd^{++}$, $Pb^{++}$, $Cu^{++}$.

En résumé, les membranes cristallines de la technique antérieure à base d'$Ag_2S$ comprennent un mélange de sulfure d'argent et d'un sulfure d'un autre métal afin de doser l'argent ou cet autre métal, ou un mélange de sulfure d'argent et d'un sel halogéné pour doser cet halogénure.

Ainsi, un des objets de la présente invention est de fournir une nouvelle membrane cristalline à base de sulfure d'argent sensible aux ions halogénures en solution bien qu'elle ne contienne pas d'halogénure et qui permette de doser les ions halogénures durant la précipitation de l'émulsion, d'une manière rapide, reproductible et précise, qui ne soit pas perturbée par la présence de faibles quantités d'halogénures lourds dans une solution d'halogénure plus léger et qui n'ait pas besoin d'être nettoyée ou réhalogénée.

Cet objet est atteint avec une membrane selon l'invention comprenant du sulfure d'argent dopé avec un ion capable de former soit avec $Ag^+$, soit avec $S^{2-}$ un sel très insoluble, c'est-à-dire beaucoup plus insoluble que les espèces en solution.

Par "sulfure d'argent dopé", on entend que le sulfure d'argent contient un agent dopant à raison de moins de 5 % en moles, et de préférence à raison d'environ 1% en moles et qui n'intervient pas dans les équilibres électrochimiques mis en oeuvre.

Un autre objet de la présente invention est d'obtenir une membrane ayant des propriétés mécaniques améliorées et une bonne résistance aux agents chimiques.

Cet objet est atteint avec une membrane cristalline d'$Ag_2S$ dopé avec un ion formant avec $S^{2-}$ ou $Ag^+$ un sel très insoluble, contenant de plus un composé hydrophobe.

Un autre objet de la présente invention est d'obtenir une électrode utilisant cette membrane qui soit d'un emploi facile et peu coûteuse.

Cet objet est atteint en incorporant cette membrane de manière interchangeable.

L'électrode selon l'invention mesure l'activité des ions halogénures en solution. Entre la face extérieure de la membrane et un élément de référence, s'établit une différence de potentiel qui varie avec l'activité de l'ion pour lequel la membrane est sélective ou sensible. La relation entre l'activité des ions et le potentiel ainsi mesuré est logarithmique (Equation de Nernst).

L'électrode selon l'invention fournit des réponses rapides et précises conformes à l'équation de Nernst dans la plupart des solutions d'halogénures. Elle permet de mesurer des activités d'ion halogénures jusqu'à $10^{-5}$ mole/l dans le réacteur de précipitation.

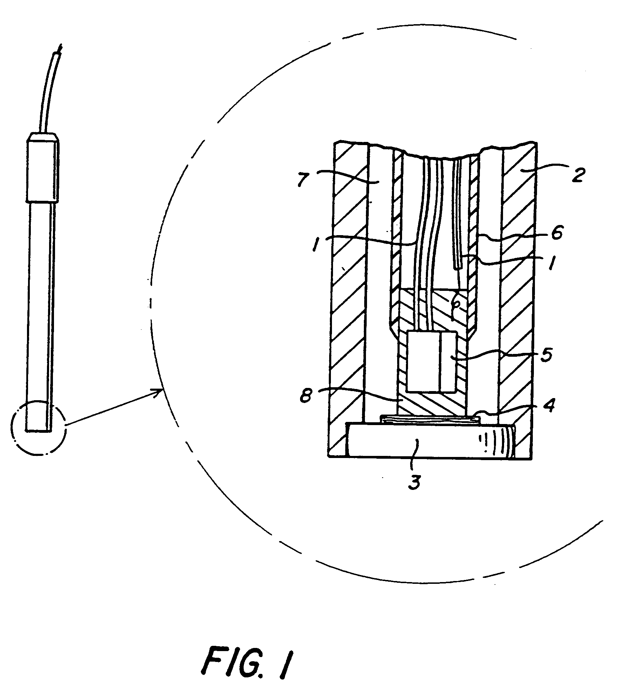

Dans un mode de réalisation de la présente invention illustré à la Figure 1, l'électrode est formée d'un barreau creux de résine (2) comprenant :

a) une électrode de référence (8), composée d'un mélange 90:10 en masse d'argent et de résine, plongée dans une solution d'AgNO$_3$ de concentration connue (7),

b) la membrane d'Ag$_2$S (3) conforme à l'invention fixée de façon étanche à une extrémité du corps de l'électrode. Par exemple, la membrane peut être fixée avec un adhésif au corps de l'électrode, auquel cas le corps de l'électrode constitue avec la membrane la partie interchangeable, ou être fixée avec un joint, par exemple un joint au silicone, auquel cas c'est la membrane seule qui est interchangeable.

En pratique, on place l'électrode de référence le plus près possible de la membrane, par exemple en interposant une rondelle de papier (4) d'épaisseur < 0,2 mm entre la membrane et l'électrode de référence, afin d'éviter la dérive du potentiel due à l'écart de température entre la membrane et l'électrode de référence. On peut aussi placer un capteur de température (5), par exemple au silicium, dans la résine pour corriger automatiquement ladite dérive du potentiel. Une gaine (6) de résine thermoplastique permet d'isoler les connections électriques (1) provenant du capteur de température (5) et de l'électrode de référence (8) de la solution de référence (7).

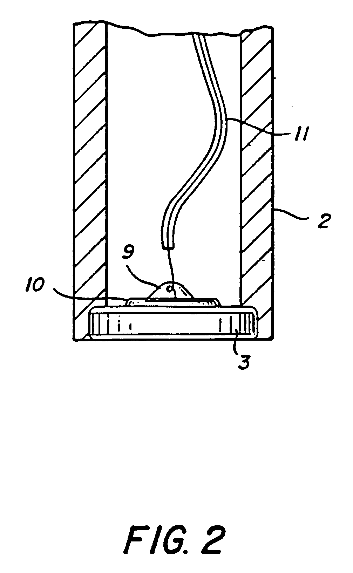

Dans un autre mode de réalisation illustré à la Figure 2, l'électrode ne contient pas d'électrolyte de référence. L'une des faces de la membrane selon l'invention (3) est mise en contact avec la solution à doser, l'autre face étant recouverte d'argent métallique (10) et reliée par une soudure à l'étain (9) à un fil métallique (11) connecté au système de mesure. Cette couche d'argent métallique permet de constituer le système de référence.

Dans encore un autre mode de réalisation (non représenté), l'électrolyte s'écoule lentement, de façon contrôlée, au travers de la membrane.

En fonctionnement, l'électrode sélective est reliée à une borne d'un millivoltmètre à impédance élevée (> $10^{12}$ Ω), dont l'autre borne est reliée à l'électrode de référence au moyen d'un pont salin.

Le procédé de préparation des membranes comprend les étapes suivantes :

1) on coprécipite le sulfure d'argent avec moins de 5% en moles d'agent dopant ; on filtre, lave et sèche le coprécipité obtenu,

2) on homogénéise le coprécipité,

3) on compacte sous pression et à température ambiante une petite quantité de coprécipité homogénéisé pour obtenir une fine pastille pratiquement non-poreuse,

4) on soumet la pastille obtenue à un traitement thermique à une température comprise entre 90°C et 150 °C.

Dans un mode de réalisation préféré, le coprécipité est mélangé de façon homogène à une substance hydrophobe.

La première étape dans la préparation des membranes est donc la coprécipitation d'Ag$_2$S et de l'agent dopant.

L'agent dopant est destiné à créer des imperfections dans la structure du cristal d'Ag$_2$S et sur sa surface, pour obtenir la conductivité élevée nécessaire.

En pratique, on choisit l'agent dopant parmi les cations ou les anions qui forment des sels très insolubles avec Ag$^+$ ou S$^{2-}$, c'est-à-dire beaucoup plus insolubles que les espèces en solution, qui sont ici les espèces entrant dans la préparation de l'émulsion, principalement des halogénures d'argent. Si l'on définit la constante de solubilité ks d'un sel comme le produit des activités des ions qui le constituent, et le produit de solubilité pks comme l'inverse du logarithme décimal de la constante de solubilité, on considère qu'un sel est "beaucoup plus insoluble" qu'un autre quand sa constante de solubilité ks est inférieure d'au moins un facteur $10^{-3}$ à la constante de solubilité de l'autre sel, ou bien que son produit de solubilité pks est supérieur d'au moins 3 unités à celui de l'autre sel. Ainsi, on choisira comme agent dopant un anion ou un cation formant avec Ag$^+$ ou S$^{2-}$ un sel ayant un pks au moins supérieur à 20, car l'espèce la plus insoluble rencontrée dans la préparation des émulsions est AgI (pks$_{AgI}$ environ 17 à 25°C), et de préférence supérieur à celui d'Ag$_2$S qui est d'environ 49 à 18°C. Par exemple on peut utiliser comme agent dopant un anion chalcogénure tel que Se$^{2-}$, Te$^{2-}$ ou un cation métallique tels que Pb$^{2+}$, Cd$^{2+}$, Cu$^{2+}$, Hg$^{2+}$, Pd$^{2+}$, Tl$^{3+}$, Au$^{3+}$,Rb$^+$. Les cations préférés sont Hg$^{2+}$, Pd$^{2+}$, Tl$^{3+}$, Au$^{3+}$, Rb$^+$. Un cation particulièrement préféré est Hg$^{2+}$.

La quantité d'agent dopant peut varier largement selon la nature même de l'agent dopant, mais reste inférieure à 5% en moles. Si l'agent dopant est Hg$^{2+}$, un intervalle préféré est 0,5-5 mole % par rapport au nombre de moles d'Ag$_2$S et plus avantageusement on utilise environ 1% en moles par rapport au nombre de moles d'Ag$_2$S.

L'agent dopant est incorporé dans $Ag_2S$ par coprécipitation. Par exemple, si le dopant est $Hg^{2+}$, on introduit par double jet $S^{2-}$ et $Ag^+$ sous la forme de sels, en présence d'un excès de $S^{2-}$ et en milieu basique, de préférence à un pH > 10, $Hg^{2+}$ se trouvant sous forme de sel dans le jet d'$Ag^+$.

Le coprécipité obtenu est sous forme de cristaux mixtes d'$Ag_2S$ et de dopant, par exemple si le dopant est $Hg^{2+}$, le coprécipité est formé de cristaux de sulfure d'argent, de sulfure mercurique et de sulfures mixtes d'argent et de mercure.

Après lavage et séchage, le précipité est homogénéisé pendant plusieurs minutes afin de casser les agglomérats de cristaux, sans pour autant broyer les cristaux. De préférence, le coprécipité est mélangé mécaniquement à un composé hydrophobe sous forme de fines particules, par exemple à sec ou en milieu solvant dans un mélangeur à billes. On peut aussi former une dispersion de particules de coprécipité homogénéisé et de substance hydrophobe dans un solvant organique, tel que le chloroforme, auquel cas, on laisse le solvant s'évaporer tout en maintenant la dispersion.

Ce composé hydrophobe permet de réduire la porosité de la membrane, améliore ses propriétés mécaniques et lubrifie sa surface. On peut utiliser tout composé hydrophobe sous forme de particules ayant une taille proche de celle des cristaux d'$Ag_2S$, c'est-à-dire inférieure à 25 µm, pourvu que ce composé soit inerte, c'est-à-dire résistant aux agents chimiques contenus dans les solutions à analyser, et soit aussi résistant aux températures du traitement thermique, c'est à dire résistant à une température de l'ordre de 150°C - comme les polymères fluorocarbonés ou les polymères halohydrocarbonés tels que le polytétrafluoroéthylène, le polyhexafluoropropylène ou le polyfluorure de vinylidène. Un polymère préféré est le polytétrafluoroéthylène Téflon® (commercialisé par Dupont de Nemours). Par exemple, on peut utiliser du Téflon DLX®6000 ayant une taille de particules de 1 µm, à raison de 0,5 à 20% en poids, avantageusement 2,5% à 3 % en poids.

L'étape suivante consiste à compacter le coprécipité homogénéisé ou le mélange contenant le coprécipité homogénéisé et le composé hydrophobe afin d'obtenir une pastille dense et pratiquement non-poreuse ayant une conductivité optimale et de bonnes propriétés mécaniques et aussi d'éviter les inclusions gazeuses. Lors de cette étape, il faut éviter la distorsion des cristaux qui conduirait à une perte de conductivité de la membrane. Le compactage est réalisé dans une presse hydraulique suivant un cycle de pression. La poudre est compactée sous vide entre deux surfaces d'acier poli. La pression P exprimée en kiloPascals varie en fonction du temps t exprimé en minutes selon l'équation :

$$P = 5 \times 10^2 + b.(t)^a \times 10^2$$

avec a compris entre 1 et 2 et b entre 5 et 15.

La pression maximum est de $55 \times 10^2$ kPa à $155 \times 10^2$ kPa.

Ensuite, un temps de repos de l'ordre de 1 à 15 minutes est observé pour stabiliser la pastille.

Enfin, un traitement thermique permet d'homogénéiser la phase cristalline (par coalescence). Le traitement est réalisé dans l'huile ou de préférence dans l'air, à une température comprise entre 90°C et environ 150°C, pendant 6 à 24 h.

La membrane ainsi obtenue a la forme d'une pastille gris foncé, d'un diamètre d'environ 10 mm et d'une épaisseur d'environ 0,8 mm. Elle est pratiquement non-poreuse, sa densité varie entre 6,55 et 7,13 et sa surface ne présente pas d'aspérités.

Les exemples 1-2 qui vont suivre concernent la préparation des membranes.

### Exemple 1

On prépare une première solution contenant 0,98 mole d'$AgNO_3$, 0,01 mole d'$Hg(CH_3COO)_2$, 0,035 mole d'acide acétique dans 100 g d'eau et une seconde solution contenant 0,5 mole de $Na_2S,9H_2O$ et $2,5 \times 10^{-3}$ mole de soude dans 919 g l'eau. On introduit sous agitation ces deux solutions par double jet dans une bassine contenant 0,156 mole de $Na_2S,9H_2O$ et 0,22 mole de soude dans 1,5 litre d'eau à 50°C. La précipitation dure 60 min. Le pH est de 11,3. On lave soigneusement le coprécipité à l'eau et on le sèche à l'acétone.

On prélève un échantillon de 5 g de précipité, on ajoute 2,5% en poids de Téflon® DLX6000.

On mélange en milieu solvant ($CHCl_3$) dans un mélangeur à billes, à température ambiante pendant 15 min, puis on laisse le solvant s'évaporer à l'air tout en continuant à mélanger. On obtient une poudre homogène.

On dépose 423 mg de cette poudre dans une matrice de densification entre les faces de deux pastilles d'acier poli. On applique une charge sur l'ensemble du groupe hydraulique suivant un cycle de pression, la pression variant de 0 à $55 \times 10^2$ kPa. On laisse reposer la membrane sous charge pendant 15 min dans la presse. Son poids est de 420 mg, son diamètre de 10 mm, son épaisseur 0,764 mm.

Ensuite, on effectue un traitement thermique dans l'air à 140°C pendant 14 h 30 min.

### Exemple 2

On prépare cette membrane en utilisant le mode opératoire de l'exemple 1 excepté que l'on utilise 3% de Téflon® DLX6000. Le poids de la membrane est de 0,421 mg et l'épaisseur de 0,791 mm.

### Exemple 3

On réalise une électrode telle que représentée à la figure 1 comprenant la membrane de l'exemple 1, en collant la membrane à la partie inférieure du corps de l'électrode. L'ensemble membrane/corps de l'électrode est alors interchangeable.

Entre deux mesures, l'électrode est rincée à l'eau et essuyée délicatement afin de la sécher.

Pour tester l'électrode selon l'invention au cours de la précipitation d'une émulsion, on la place en parallèle dans la bassine avec une électrode de la technique antérieure à barreau d'argent recouvert d'AgBr.

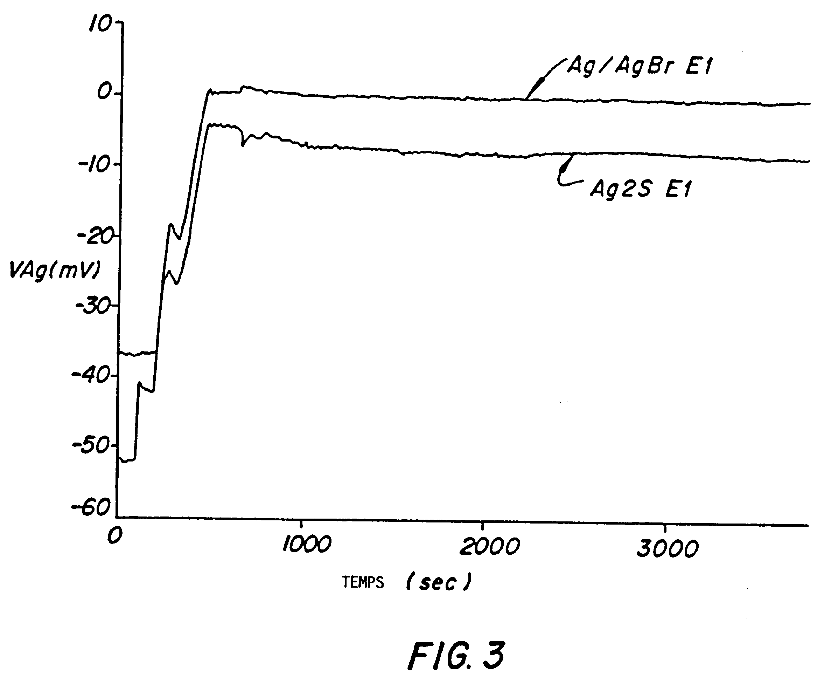

La figure 3 permet de comparer la réponse de l'électrode comprenant la membrane de l'exemple 1 avec une électrode classique Ag/AgBr pendant la précipitation d'une émulsion de bromure d'argent. Au cours de la précipitation, le $V_{Ag}$ dans la bassine varie d'environ -50 mV à près de 0 mV. Cette émulsion est préparée par double jet en introduisant du bromure de potassium et du nitrate d'argent dans la solution de gélatine. Sur la courbe, on observe plusieurs pics correspondant successivement à l'apparition des premiers germes de cristaux d'halogénure d'argent, à l'élévation de température et à un rajout de gélatine, puis la précipitation se poursuit à un $V_{Ag}$ constant d'environ -8 mV. Avec l'électrode selon l'invention, on obtient une réponse même avant que le bromure d'argent ne précipite et on observe nettement la sursaturation juste avant l'apparition des premiers germes de cristaux alors que l'électrode Ag/AgBr ne permet pas de la distinguer. La détection de cette sursaturation peut être très utile pour prévoir le début de la précipitation.

Exemple 4

On réalise une électrode, telle que représentée à la figure 2, en recouvrant une face de la membrane préparée à l'exemple 2 d'une couche de polymère contenant de l'argent métallique et en reliant cette dernière par une soudure à l'étain à un fil de cuivre, lui-même connecté au système de mesure. L'ensemble fil/membrane est placé dans un cylindre de résine et est interchangeable facilement.

On teste cette électrode selon l'invention comme précédemment, au cours de la précipitation d'une émulsion.

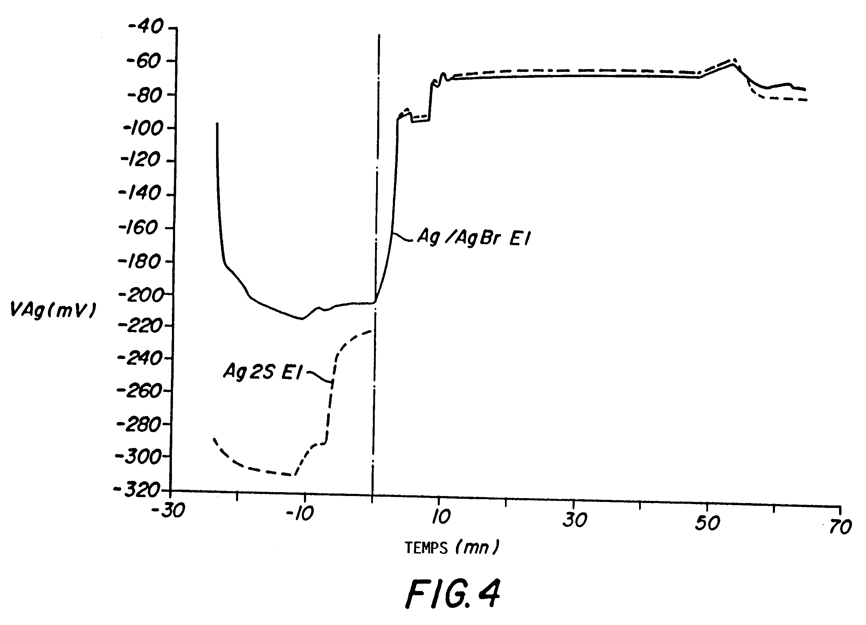

La figure 4 permet de comparer la réponse de l'électrode comprenant la membrane de l'exemple 2 avec une électrode Ag/AgBr pendant la précipitation d'une émulsion de bromoiodure d'argent dans laquelle le $V_{Ag}$ varie de -310 mV à -50 mV. Au temps t = 0, on introduit d'abord du nitrate d'argent dans la bassine contenant une faible quantité d'iodure de potassium, puis du nitrate d'argent, du bromure de potassium et de l'iodure de potassium, afin de précipiter le bromoiodure d'argent.

On observe qu'au début (avant le temps t = 0) pendant que les deux électrodes s'équilibrent, l'électrode Ag/AgBr se débromure (variation importante du $V_{Ag}$ qui passe de -100 mV à -210 mV) alors que l'électrode selon l'invention donne rapidement une réponse.

On voit que dans les exemples 3 et 4 les réponses des électrodes selon l'invention sont très proches de la réponse d'une électrode classique Ag/AgBr, mais les électrodes selon l'invention sont beaucoup plus sensibles au processus de nucléation. De plus, dans le cas de la précipitation d'émulsions contenant de l'iodure, les électrodes selon l'invention peuvent être réutilisées après un simple rinçage alors que les électrodes Ag/AgBr de la technique antérieure doivent être réhalogénées.

## Revendications

1. Membrane sensible aux ions halogénures en solution, ladite membrane comprenant du sulfure d'argent dopé avec un ion capable de former soit avec $Ag^+$, soit avec $S^{2-}$, un sel ayant un pks supérieur d'au moins trois unités à celui des espèces en solution, membrane caractérisée en ce qu'elle contient une quantité dopante d'agent dopant inférieure à 5 mole % par rapport au nombre de moles d'$Ag_2S$, et en ce que l'agent dopant est choisi parmi $Rb^+$, $Hg^{2+}$, $Pd^{2+}$, $Tl^{3+}$, $Au^{3+}$, $Se^{2-}$, $Te^{2-}$.

2. Membrane selon la revendication 1 dans laquelle l'agent dopant est $Hg^{2+}$.

3. Membrane selon la revendication 2 dans laquelle le rapport en moles de $Hg^{2+}$ à $Ag_2S$ est d'environ 1%.

4. Membrane selon les revendications 1 à 3 comprenant de plus une substance hydrophobe inerte.

5. Membrane selon la revendication 4, dans laquelle ladite substance hydrophobe est un polymère hydrophobe résistant à une température d'environ 150°C.

6. Membrane selon la revendication 5 dans laquelle ledit polymère hydrophobe est du polytétrafluoroéthylène, du polyhexafluoropropylène ou du polyfluorure de vinylidène.

7. Membrane selon la revendication 6, dans laquelle le polymère est du polytétrafluoroéthylène et le rapport en poids du polytétrafluoroéthylène au sulfure d'argent est compris entre 0,5 et 20 %.

8. Membrane selon les revendications 6 et 7, dans laquelle le polytétrafluoroéthylène est sous forme de particules ayant une taille inférieure à 25 μm.

9. Procédé pour fabriquer des membranes sensibles aux ions halogénures en solution selon l'une quelconque des revendications précédentes, comprenant les étapes suivantes :

1) on coprécipite le sulfure d'argent dopé en faisant réagir une solution contenant un sel d'argent soluble avec une solution contenant l'agent dopant ; on filtre, lave et sèche le coprécipité obtenu ;

2) on homogénéise le coprécipité mécaniquement,

3) on compacte sous pression et à température ambiante une petite quantité de coprécipité homogénéisé pour obtenir une fine pastille pratiquement non-poreuse,

4) on soumet la pastille obtenue à un traitement thermique entre 90°C et 150°C,

caractérisé en ce que la quantité d'agent dopant dans la solution contenant l'agent dopant est telle que le coprécipité de sulfure d'argent dopé obtenu à l'étape 1 contient moins de 5 mole % d'agent dopant par rapport au nombre de moles d'Ag$_2$S.

10. Procédé selon la revendication 9, dans lequel l'agent dopant est Hg$^{2+}$ et la coprécipitation a lieu à un pH >10.

11. Procédé selon les revendications 9 ou 10, dans lequel le coprécipité est mélangé à une substance hydrophobe inerte.

12. Procédé selon les revendications 9 à 11 dans lequel le coprécipité est homogénéisé dans un mélangeur à billes avec du polytétrafluoroéthylène, à l'étape 2).

13. Procédé selon les revendications 9 à 10 dans lequel le coprécipité homogénéisé à l'étape 2) est mélangé avec du polytétrafluoroéthylène en formant une dispersion dans un solvant organique puis en séchant cette dispersion à l'air.

14. Procédé selon l'une quelconque des revendications 9 à 13, dans lequel dans l'étape 3), la pression est appliquée selon un cycle de pression et varie entre 0 et 155 x 10$^2$ kPa.

15. Procédé selon les revendications 9 à 14, dans lequel le traitement thermique est conduit à une température comprise entre 90°C et 150°C dans l'air ou l'huile.

16. Electrode pour mesurer l'activité d'ions halogénures en solution formée d'un barreau creux de résine (2) comprenant a) une électrode de référence (8) plongée dans un liquide de référence (7), b) une membrane d'Ag$_2$S (3) fixée de façon étanche à une extrémité du corps de l'électrode, caractérisée en ce que la membrane d'Ag$_2$S est telle que définie dans l'une quelconque des revendications 1 à 8.

17. Electrode pour mesurer l'activité d'ions halogénures en solution comprenant une membrane d'Ag$_2$S (3) en contact avec la solution à doser sur une de ses faces et dont l'autre face est recouverte d'argent métallique (10) et reliée de manière appropriée à un fil métallique (11) connecté au système de mesure, caractérisée en ce que la membrane d'Ag$_2$S est telle que définie dans l'une quelconque des revendications 1 à 8.

18. Utilisation de l'electrode selon la revendication 16 ou 17 pour mesurer l'activité d'ions halogénures d'argent lors de la préparation des émulsions photographiques, lesdites émulsions étant des émulsions pur halogénure ou des émulsions mixtes.


**Patentansprüche**

1. Membran, die gegenüber Halogenidionen in Lösung empfindlich ist, wobei die Membran Silbersulfid umfaßt, das mit einem Ion dotiert ist, das dazu befähigt ist, entweder mit Ag$^+$ oder mit S$^{2-}$ ein Salz mit einem pks-Wert zu bilden, der um mindestens drei Einheiten größer ist als derjenige der Spezies in der Lösung, dadurch gekennzeichnet, daß die Membran eine dotierende Menge eines Dotierungsmittels enthält, die kleiner ist als 5 Mol-%, bezogen auf die Ag$_2$S-Mole, und daß das Dotiermittel ausgewählt ist aus Rb$^+$, Hg$^{2+}$, Pd$^{2+}$, Tl$^{3+}$, Au$^{3+}$, Se$^{2-}$, Te$^{2-}$.

2. Membran nach Anspruch 1, in der das Dotiermittel Hg$^{2+}$ ist.

3. Membran nach Anspruch 2, in dem das molare Verhältnis von Hg$^{2+}$ zu Ag$_2$S etwa 1 % beträgt.

4. Membran nach einem der Ansprüche 1 - 3, die ferner ein inertes hydrophobes Material aufweist.

5. Membran nach Anspruch 4, in der das hydrophobe Material ein hydrophobes Polymer ist, das Temperaturen von etwa 150°C zu widerstehen vermag.

6. Membran nach Anspruch 5, in der das hydrophobe Polymer Poly(tetrafluoroethylen), Poly(hexafluoropropylen) oder Poly(vinylidenfluorid) ist.

7. Membran nach Anspruch 6, in der das Polymer Poly(tetrafluoroethylen) ist, und in der das Gew.-Verhältnis von Poly(tetrafluoroethylen) zu Silbersulfid im Bereich von 0,5 bis 20 % liegt.

8. Membran nach Anspruch 6 oder 7, in der das Poly(tetrafluoroethylen) in Form von Teilchen mit einer Größe von weniger als 25 μm vorliegt.

9. Verfahren zur Herstellung einer Membran, die gegenüber Halogenidionen in Lösung empfindlich ist, nach einem der vorstehenden Ansprüche, mit den folgenden Stufen:

1) Silbersulfid wird durch Umsetzung einer Lösung, enthaltend ein lösliches Silbersalz mit einer Lösung, enthaltend das Dotiermittel, co-ausgefällt, worauf das erhaltene Coprecipitat filtriert, gewaschen und getrocknet wird,

2) das Coprecipitat wird mechanisch homogenisiert,

3) eine kleine Menge des homogenisierten Coprecipitates wird unter Druck bei Umgebungstemperatur unter Gewinnung eines praktisch unporösen dünnen Pellets verdichtet,

4) das Pellet wird einer thermischen Behandlung zwischen 90°C und 150°C ausgesetzt,

dadurch gekennzeichnet, daß die Menge an Dotiermittel in der Lösung, die das Dotiermittel enthält, derart ist, daß das dotierte $Ag_2S$-Coprecipitat, das in Stufe 1 erhalten wird, weniger als 5 Mol-% des Dotiermittels, bezogen auf Mole $Ag_2S$, enthält.

10. Verfahren nach Anspruch 9, bei dem das Dotiermittel $Hg^{2+}$ ist, und bei dem die Co-Ausfällung bei einem pH-Wert von >10 erfolgt.

11. Verfahren nach Anspruch 9 oder 10, bei dem das Coprecipitat mit einem inerten hydrophoben Material vermischt wird.

12. Verfahren nach einem der Ansprüche 9 - 11, bei dem das Coprecipitat mit Poly(tetrafluoroethylen)in einer Kugelmühle in Stufe 2) homogenisiert wird.

13. Verfahren nach Anspruch 9 oder Anspruch 10, bei dem das Coprecipitat, das in Stufe 2) homogenisiert wird, mit Poly(tetrafluoroethylen) vermischt wird, durch Erzeugung einer Dispersion in einem organischen Lösungsmittel, worauf die Dispersion an der Luft trocknen gelassen wird.

14. Verfahren nach einem der Ansprüche 9 - 13, bei dem in Stufe 3) der Druck in einem Druck-Zyklus angewandt wird und zwischen 0 und 155 x 10² kPa variiert.

15. Verfahren nach einem der Ansprüche 9 - 14, bei dem die thermische Behandlung bei einer Temperatur zwischen 90°C und 150°C in Luft oder in Öl durchgeführt wird.

16. Elektrode zur Messung der Aktivität von Halogenidionen in Lösung, hergestellt aus einem länglichen hohlen röhrenförmigen Behälter aus Harz (2) mit:

a) einer Referenz-Elektrode (8), die in eine Referenzlösung (7) eintaucht,

b) einer $Ag_2S$-Membran (3), die dicht an einem Ende des Elektrodengehäuses befestigt ist,

dadurch gekennzeichnet, daß die $Ag_2S$-Membran eine Membran nach einem der Ansprüche 1 - 8 ist.

17. Elektrode zur Messung der Aktivität von Halogenidionen in Lösung mit einer $Ag_2S$-Membran (3), deren eine Oberfläche in Berührung mit der Testlösung steht und deren andere Oberfläche mit metallischem Silber (10) beschichtet ist und in geeigneter Weise an einen Metalldraht (11) angeschlossen ist, der sie mit dem Meßsystem verbindet, dadurch gekennzeichnet, daß die $Ag_2S$-Membran eine Membran nach einem der Ansprüche 1 - 8 ist.

18. Verwendung der Elektrode nach Anspruch 16 oder Anspruch 17 zur Messung der Aktivität von Halogenidionen während der Herstellung photographischer Emulsionen, wobei die Emulsionen reine Halogenidemulsionen oder Mischhalogenidemulsionen sind.

**Claims**

1. A membrane sensitive to halide ions in solution, said membrane comprising silver sulfide doped with an ion capable to form, either with $Ag^+$ or with $S^{2-}$ a salt having a pks higher by at least 3 units to the one of the species in solution, membrane characterized in that it contains a doping amount of doping agent lower than 5 mole percent based on $Ag_2S$ moles and in that said doping agent is selected among $Rb^+$, $Hg^{2+}$, $Pd^{2+}$, $Tl^{3+}$, $Au^{3+}$, $Se^{2-}$, $Te^{2-}$.

2. A membrane according to Claim 1 wherein said doping agent is $Hg^{2+}$.

3. A membrane according to Claim 2 wherein the molar ratio of $Hg^{2+}$ to $Ag_2S$ is about 1 %.

4. A membrane according to any of Claims 1 to 3 further comprising an inert hydrophobic material.

5. A membrane according to Claim 4 wherein said hydrophobic material is a hydrophobic polymer resistant to temperatures of about 150°C.

6. A membrane according to Claim 5 wherein said hydrophobic polymer is poly(tetrafluoroethylene), poly(hexafluoropropylene) or poly(vinylidene fluoride).

7. A membrane according to Claim 6 wherein the polymer is poly(tetrafluoroethylene) and the weight ratio of poly(tetrafluoroethylene) to silver sulfide is in the range of from 0.5 to 20 %.

8. A membrane according to Claim 6 or Claim 7 wherein said polytetrafluoroethylene is in the form of particles having a size less than 25 $\mu$m.

9. A process for manufacturing membranes sensitive to halide ions in solution according to any of the preceding claims comprising the following steps :

 1) silver sulfide is coprecipitated by reacting a solution containing a soluble silver salt with a solution containing the doping agent, the resulting coprecipitate obtained is filtered, washed and dried,

 2) the coprecipitate is mechanically homogenized,

 3) a small amount of said homogenized coprecipitate is compacted under pressure at ambient temperature to obtain a practically imporous thin pellet,

 4) the pellet is subjected to a thermal treatment between 90°C and 150°C

characterized in that the amount of doping agent in the solution containing the doping agent is such that the doped $Ag_2S$ coprecipitate obtained at step 1 comprises less than 5 % mole of doping agent based on $Ag_2S$ moles.

10. A process according to Claim 9 wherein the doping agent is $Hg^{2+}$ and the coprecipitation is run at a pH > 10.

11. A process according to Claim 9 or claim 10 wherein the coprecipitate is mixed with an inert hydrophobic material.

12. A process according to any of Claims 9 to 11 wherein the coprecipitate is homogenized with poly(tetrafluoroethylene) in a ball mill at step 2).

13. A process according to Claim 9 or Claim 10 wherein the coprecipitate homogenized at step 2) is mixed with poly(tetrafluoroethylene) by forming a dispersion in an organic solvent and allowing this dispersion to air dry.

14. A process according to any of Claims 9 to 13, wherein at step 3), the pressure is applied according to a pressure cycle and varies from 0 to 155

$x \ 10^2$ kPa.

15. A process according to any of Claims 9 to 14 wherein said thermal treatment is run at a temperature comprised between 90°C and 150°C in the air or in oil.

16. Electrode for measuring the activity of halide ions in solution made of an elongated hollow tubular container of resin (2) comprising :

 a) a reference electrode (8) immersed in a reference solution (7),

 b) a $Ag_2S$ membrane (3), tightly mounted at an end of the electrode housing,

characterized in that the $Ag_2S$ membrane is as defined in any of claims 1 to 8.

17. Electrode for measuring the activity of halide ions in solution comprising a $Ag_2S$ membrane (3) having one face contacting the test solution, the other face being coated with metal silver (10) and appropriately connected to a metal wire (11) itself connected to the measuring system,

characterized in that the $Ag_2S$ membrane is as defined in any of claims 1 to 8.

18. Use of the electrode according to Claim 16 or Claim 17 for measuring the activity of halides ions during the preparation of photographic emulsions, said emulsions being pure halide or mixed halide emulsions.

FIG. 1

FIG. 2

FIG. 3

FIG.4